# EUROPÄISCHE PATENTSCHRIFT

(11) **EP 1 659 878 B1**
(45) Veröffentlichungstag und Bekanntmachung des Hinweises auf die Patenterteilung: **02.07.2008**
(21) Anmeldenummer: 04764813.4
(22) Anmeldetag: 03.09.2004
(51) Int. Cl.: A23J 7/00, A23L 1/308, A23L 1/30

(54) **FORMULIERUNG AUF PHOSPHOLIPIDBASIS**
FORMULATION BASED ON PHOSPHOLIPIDS
FORMULATION A BASE DE PHOSPHOLIPIDES

(30) Priorität: 04.09.2003 DE 10340741
(43) Veröffentlichungstag der Anmeldung: 31.05.2006
(73) Patentinhaber: BIOGHURT BIOGARDE GMBH & CO. KG, 85354 Freising (DE)
(72) Erfinder: CREMER, Dirk, 85406 Zolling (DE); SKOLAUT, Alexander, 82319 Starnberg (DE); FRANCIC, Polona, 85354 Freising (DE)
(74) Vertreter: Böhm, Brigitte
(86) Internationale Anmeldenummer: PCT/EP2004/009861
(87) Internationale Veröffentlichungsnummer: WO 2005/023011

(56) Entgegenhaltungen:
- EP-A- 0 521 398
- EP-A- 0 841 057
- WO-A-01/32038
- DATABASE WPI Section Ch, Week 198836 Derwent Publications Ltd., London, GB; Class B04, AN 1988-254451 XP002307817 & JP 63 185929 A (NIPPON OILS & FATS CO LTD) 1 August 1988 (1988-08-01) cited in the application
- DATABASE WPI Section Ch, Week 200164 Derwent Publications Ltd., London, GB; Class B07, AN 1995-400884 XP002307818 & JP 03 213471 B2 (POLA CHEM IND INC) 2 October 2001 (2001-10-02) cited in the application
- PATENT ABSTRACTS OF JAPAN vol. 2000, no. 01, 31 January 2000 (2000-01-31) & JP 11 289993 A (ASAHI DENKA KOGYO KK), 26 October 1999 (1999-10-26) cited in the application
- PATENT ABSTRACTS OF JAPAN vol. 1997, no. 08, 29 August 1997 (1997-08-29) & JP 09 107888 A (MIYOSHI OIL & FAT CO LTD), 28 April 1997 (1997-04-28)
- VEREYKEN^A I J ET AL: "Fructans insert between the headgroups of phospholipids" BIOCHIMICA ET BIOPHYSICA ACTA. BIOMEMBRANES, AMSTERDAM, NL, vol. 1510, no. 1-2, 9 February 2001 (2001-02-09), pages 307-320, XP004248788 ISSN: 0005-2736

## Beschreibung

Gegenstand der vorliegenden Erfindung ist eine Formulierung enthaltend eine Phospholipid-Komponente als physiologisch aktiven Inhaltsstoff, ein Verfahren zu deren Herstellung und ihre Verwendung.

Bei der Substanzklasse der Phospholipide handelt es sich um sog. komplexe Lipide mit amphiphilen, also gleichzeitig lipophilen und hydrophilen Eigenschaften, was sie u.a. zur Ausbildung von Lipid-Doppelschichten in wässrigen Medien befähigt. Phospholipide (auch Phosphatide genannt) sind chemisch betrachtet Phosphodiester, bei denen die Phosphorsäure einerseits mit einem Sphingosin- oder Glycerid-Rest und andererseits mit Cholin, Ethanol, Amin, Serin, Inositol oder Glycerin verestert ist. Das Phosphatidylcholin ist auch als Lecithin bekannt und ist zugleich Namensgeber für eine große Gruppe spezieller Phospholipide, die Lecithine. Phosphatidylserin und Phosphatidylethanolamin werden auch als Keptaline bezeichnet.

Die ebenfalls zu dieser Gruppe gehörenden Lyso-Derivate entstehen durch hydrolytische Spaltung mittels spezifischer Phospholipasen in C₁- und/oder C₂-Stellung des Glycerin-Anteils.

Auf Grund ihrer amphiphilen Eigenschaften dienen die Phospholipide auch als Hüllsubstanzen der bekannten Liposomen und Transferosomen. In diesem Zusammenhang werden sie vor allem auf Grund ihrer bio-adhesiven Merkmale im Bereich der Schleimhaut-Applikationen eingesetzt, wobei sie insbesondere in die Nasen- und Mundhöhlen eingebracht werden.

In chemisch-modifizierter Form werden Phospholipide aber auch als oberflächenaktive Formulierungshilfsmittel (surfactants) verwendet. Bekannt ist es auch, mittels Ultraschall Vesikel herzustellen, die Phospholipide als Umhüllung tragen. Aus dem Stand der Technik sind auch Kapseln hinlänglich bekannt, die ebenfalls Phospholipide als Hüllsubstanz tragen. Werden Phospholipide in der Füllung, also im Kapselkern eingesetzt, so fungieren sie dort zumeist in geringen Anteilen als Formulierungshihsmittel mit meist lösungsvermittelnden Eigenschaften.

Spezielle Granulate mit Lecithin-Hüllen sind aus der japanischen Anmeldung JP 9147043 bekannt, sowie aus EP-A 493441. Diese Granulate, die u.a. Steroide als bioaktive Substanzen enthalten, werden als Futtermitteladditive eingesetzt.

Gemäß WO 87/04347 werden Lysophospholipide als Lösungsvermittler für hydrophobe, bioaktive Substanzen beschrieben.

Phospholipide in flüssiger Form sind im Zusammenhang mit Hart- oder WeichGelatinekapseln vorbeschrieben, wobei sich allerdings Formulierungen von Phosphatidylserin und -cholin, insbesondere im Gemisch mit anderen Lecithinen und/oder Ölen, in Weichkapseln als nicht ausreichend stabil erwiesen haben.

Eine Folge dieser beschriebenen Instabilität der Lecithine als Kapselinhalte ist, dass statt einer gewünschten flüssigen Formulierung bestenfalls mäßig pastöse Blends verkapselt werden können.

Schwierigkeiten hinsichtlich der Verarbeitbarkeit und Stabilität von Phospholipid-Formulierungen bestehen aber nicht nur im Zusammenhang mit überwiegend lipophilen Darreichungsformen, sondern vor allen Dingen auch bei pulverförmigen Formulierungen und hier insbesondere im Hinblick auf deren Wasserdispergierbarkeit.

Aus diesem Grund wurde vielfach versucht, verbesserte pulverförmige Phospholipid-Formulierungen herzustellen, wobei sich das Augenmerk vornehmlich auf wasserdispergierbare Formen gerichtet hat.

So ist aus dem japanischen Patent JP 63185929 die Herstellung eines dispergierbaren Lecithin-Pulvers mit einem hohen Phosphatidylcholin-Gehalt bekannt, bei dem eine Dispersion des Lecithins in einem Fett oder Öl mit einer wässrigen Lösung bzw. Dispersion eines wasserlöslichen Proteins oder Cellulosepulvers zunächst gemischt und anschließend der so erhaltene Blend sprühgetrocknet wird. Das wasserlösliche Protein bzw. das Cellulosepulver wirkt dabei als Umhüllungsmaterial und wird in Form einer wässrigen Dispersion eingesetzt. Erhalten wird mit diesem Verfahren eine gebrauchsfertige Zusammensetzung mit einem hohen Phosphatidylcholin-Gehalt und guten dispergierenden Eigenschaften in Wasser, so dass es sich vor allem zur Herstellung wässriger Dispersionen mit niedriger Viskosität eignet.

Gemäß JP 11289993 wird eine wasserdispergierbare Lecithin-Zusammensetzung erhalten, indem Lecithin mit einem hohen Reinheitsgrad gemeinsam mit Ethanol und einem wasserlöslichen Polymer in Wasser eingetragen wird. Hierfür eignen sich als wasserlösliche Polymere insbesondere Natriumcaseinat, Carrageenane, Xanthangum, Hydroxypropylcellulose und modifizierte Stärke. Die auf diese Weise erhaltene Lecithin-Zusammensetzung kann zur Ausbildung einer stabilen Emulsion mit niedriger Viskosität und sehr guter Handhabbarkeit herangezogen werden.

EP0841057 beschreibt eine Zusammensetzung umfassend mindestens ein Phospholipid und einen Stabilisator, enthältend zerkleinerte Bestandteile und/oder einen Extrakt von Getreide.

Die Herstellung eines festen oder pulverförmigen Lecithins ist in JP 2779236 beschrieben. Demzufolge wird zunächst eine Dispersion enthaltend Lecithin, Polyalkohol und einen hydrophilen Polyoxyethylenalkylester oder -ether vorgelegt, anschließend dehydriert und schließlich getrocknet. Die eingesetzte Lecithin-Komponente kann vorzugsweise einen Elektrolyten enthalten, wie sie Ascorbinsäure, Pyrrolidoncarboxylat, Aminosäuren, Citronensäure und geeignete Salze davon darstellen.

Eine Mischung enthaltend Lecithin und eine Styrol-Komponente in Anteilen <5 Gew.-% beschreibt JP 62126966. Durch den Zusatz von Lecithin und einer Styrol-Komponente zu einem Instant-Pulver, wie sie Milchpulver, Trockensuppen, Kakao- und Kaffeepulver sowie Cremepulver darstellen, wird deren Löslichkeit oder Dispergierbarkeit in kaltem Wasser deutlich erhöht.

Nachteilig bei all diesen beschriebenen Verfahren, insbesondere im Hinblick auf die Erzielung wasserdispergierbarer Phospholipid-Pulver ist insgesamt nach wie vor, dass mit den so erhältlichen Phospholipid-haltigen Produkten lediglich mehr oder weniger wasserdispergierbare Pulver erhalten werden. So treten nach wie vor bei Wasserkontakt Klumpenbildungen auf, die durch die hydrophil-hydrophob-Wechselwirkung zwischen der Phospholipid-Komponente und dem sie umgebenden wasserhaltigen Medium bedingt werden. Selbst Sprühtrocknungsverfahren oder sog. "top spray"-Verfahren und/oder der Zusatz von Lösevermittlern wie Maltodextrin und Fettcaseinat bzw. alkoholische Komponenten führen zu keiner raschen und zugleich verbesserten Wasserdispergierbarkeit ohne Klumpenbildung.

Aufgrund des geschilderten Nachteils des Standes der Technik hat sich für die vorliegende Erfindung die Aufgabe gestellt, eine Formulierung bereitzustellen, die als physiologisch aktiven Inhaltsstoff eine Phospholipid-Komponente enthält und die deutlich verbesserte Eigenschaften hinsichtlich ihrer Wasserdispergierbarkeit aufweist.

Gelöst wurde diese Aufgabe mit einer entsprechenden Formulierung, die in wasserdispergierbarer Granulatform vorliegt und die neben der Phospholipid-Komponente eine Fructan-Komponente als Formulierungshilfsmittel im Gewichtsverhältnis 5 bis 70 : 95 bis 30 enthält.

Bei Fructanen handelt es sich um Verbindungen mit mindestens einer Fructosyl-Fructose-Bindung, wie sie bspw. im Inulin vorliegen. Es sind also Fructo-Oligosaccharide oder vereinfacht "Oligofructosen", die als weit verbreitete Kohlenhydrate in der Natur vorkommen. Sie finden sich vornehmlich in über 30 000 Pflanzenfamilien und werden auch als physiologisch aktive Bestandteile bei der menschlichen Ernährung eingesetzt. Hohe Anteile an Fructan und insbesondere Inulin als natürliche Inhaltsstoffe finden sich insbesondere in Pflanzenfasern, aber auch in Speicherorganen von Pflanzen, wobei erhöhte Fructan-Anteile in Konzentrationen von 0,3 bis 6 Gew.-%, vor allem in Weizen, Zwiebeln, Bananen, Chicoree, Lauch und Zuckerrüben anzutreffen sind.

Inulin weist einen Polymerisationsgrad von 50 bis 60 Fructose-Einheiten auf und wird technologisch aus Chicoreewurzeln gewonnen.

Die für Fructane typischen β-(2-1)-Bindungen der Fructose-Einheiten können im Gastroindestinaltrakt durch Enzyme nicht gespalten werden; Inulin und andere Oligofructosen werden aber im Dickdarm, bspw. durch Bifidobakterien, teilweise fermentiert, weshalb man bei den Fructanen auch von sogenannten löslichen Nahrungsfasern (Ballaststoffen) mit äußerst geringem Energiewert spricht.

Inulin zeichnet sich darüber hinaus dadurch aus, dass es in Wasser Mikrokristalle zu bilden vermag, die einen cremigen Geschmack hervorrufen. Inulin stellt deshalb auch einen kalorienarmen Fettersatzstoff dar. Oligofructosen zeigen ähnliche Eigenschaften wie Glucosesirup und werden somit wegen ihres süßen Geschmacks, der in etwa ein Drittel der Intensität von Saccharose erreicht, als Zuckerersatz in Lightprodukten, aber auch als Feuchthaltemittel in Backwaren eingesetzt.

Überraschend hat sich mit der erfindungsgemäßen Formulierung herausgestellt, dass Phospholipide und insbesondere Lecithine mit einem hohen Phosphatidylserin-Anteil gemeinsam mit Fructanen, wie bspw. Inulin, bei gleichzeitigem Einsatz von entionisiertem Wasser unter einfacher Aufgranulierung zu einer hochgradig wasserdispergierbaren Formulierung umgearbeitet werden können. Aufgrund der schonenden Verarbeitung treten kaum Verluste bei den Hauptinhaltsstoffen auf und es kann darüber hinaus auf eine zum Teil aufwendige technische Nachbehandlung, bspw. in Form einer Sprühtrocknung unter hohem Energieeinsatz, verzichtet werden. Auch stellen die zur Formulierung eingesetzten Fructane Lebensmittel-geeignete Hilfsstoffe dar, die in größeren Mengen leicht verfügbar sind, weshalb die erzielbaren Formulierungen ohne einen großen technischen Aufwand in wirtschaftlich günstiger Art und Weise zubereitet werden können.

Diese Vorteile waren in diesem Ausmaß nicht vorherzusehen.

Hinsichtlich der eingesetzten Phospholipid-Komponente ist die vorliegende erfindungsgemäße Formulierung keinerlei Einschränkung unterworfen. Allerdings haben sich Phospholipid-Mischungen, wie sie bspw. Lecithine darstellen, insbesondere jedoch definierte Phospholipide, wie das Phosphatidylcholin, Phosphatidylethanolamin, Phosphatidylinosit, Phosphatidylserin und/oder deren Lysoformen als besonders geeignet gezeigt.

Bezüglich des Phospholipid-Anteils an der Gesamtformulierung sind Mindestanteile von 2,0 Gew.-% ebenso zu bevorzugen wie Mindestanteile von 5,0 Gew.-% des besonders geeigneten Phosphatidylserins.

Hinsichtlich der für die Formulierung gut geeigneten Lecithine haben sich Varietäten als günstig erwiesen, die einen Phosphatidylserin-Gehalt von mind. 20 Gew.-% enthalten, wobei Phosphatidylserin-Gehalte von mehr als 30 und insbesondere mehr als 45 Gew.-% ebenfalls gut geeignet sind und wobei natürlich die Mindestanteile an der Gesamtformulierung beachtet werden sollten.

Der breite Anwendungsbereich der von der vorliegenden Erfindung beanspruchten Formulierung wird auch durch die freie Wahl der Fructan-Komponente verdeutlicht. Diese ist nämlich auf keinen bestimmten Vertreter beschränkt, so dass Graminan, Inulin und Levan gleichermaßen gut als Formulierungshilfsmittel im Rahmen der Erfindung eingesetzt werden können. Dabei ist es selbstverständlich neben den reinen Verbindungen auch möglich, beliebige Mischungen einzusetzen.

Die vorteilhafte Breite der beanspruchten Formulierung wird nicht nur durch die hohe Variabilität hinsichtlich der Hauptkomponenten deutlich, sondern auch im geeigneten Mischungsverhältnis zwischen Phospholipid-Komponente und der Fructan-Komponente. So sind vorzugsweise Verhältnisse zwischen der Phospholipid-Komponente und der Fructan-Komponente von 10 bis 40 : 90 bis 60 und besonders bevorzugt 15 bis 30 : 85 bis 70 möglich.

Zwar ist die ausgeprägte Wasserdispergierbarkeit der beanspruchten Granulate hauptsächlich durch das eingesetzte Formulierungshilfsmittel bedingt, in Abhängigkeit vom jeweiligen Einsatzbereich kann die Wasserdispergierbarkeit aber auch durch einen Restwassergehalt verbessert werden. Aus diesem Grund berücksichtigt die vorliegende Erfindung auch eine spezielle Formulierung, deren Wassergehalt von 0,01 bis 10 Gew.-% reicht. Dieser Wassergehalt, der üblicherweise 0 Gew.-% ausmacht, wirkt sich aber nicht nur auf die Wasserdispergierbarkeit der gesamten Formulierung aus, sondern er ermöglicht auch eine Einflussnahme auf die physikalischen Eigenschaften der Granulate.

In diesem Zusammenhang sieht die vorliegende Erfindung auch Formulierungen als besonders bevorzugt an, deren Granulate eine Korngröße von 10 µm bis 1 mm und besonders bevorzugt von 100 bis 300 µm aufweisen, wobei die Hauptfraktion im Bereich von 125 bis 200 µm liegt.

Neben den Hauptbestandteilen, nämlich der Phospholipid-Komponente und der Fructan-Komponente, kann die beanspruchte Formulierung aber auch noch weitere physiologisch aktive Bestandteile und/oder Formulierungshilfsmittel enthalten, wie sie z.B. von den Hauptkomponenten verschiedene Kohlenhydrate, Vitamine, Alkohole, Aminosäuren, Fettsäuren, Carbonsäuren, Salze, Faserstoffe, Aroma- und Farbstoffe natürlichen oder synthetischen Ursprungs darstellen.

Ergänzend zur beanspruchten Formulierung berücksichtigt die vorliegende Erfindung auch ein Verfahren zur Herstellung dieser Formulierung, wobei die Phospholipid-Komponente in einer Granuliertrommel mit der Fructan-Komponente im Gewichtsverhältnis 5 bis 70 : 95 bis 30 gegebenenfalls mit weiteren physiologisch aktiven Bestandteilen vorgelegt wird, anschließend mit 5 bis 20 Gew.-%, bezogen auf die Trockenmischung, mit mind. einfach entionisiertem Wasser versetzt wird und anschließend auf eine Korngröße von 10 µm bis 1 mm granuliert wird. Dieses Verfahren, für das insbesondere ein zweifach entionisiertes Wasser eingesetzt werden sollte, wird bevorzugt so lange durchgeführt, bis der Wassergehalt der Granulate 0,01 bis 10 Gew.-% beträgt, wobei ein Wasser-Gehalt von 0,01 Gew.% die Regel ist.

Die Vorteile der beanspruchten Formulierung zeigen sich nicht nur in deren relativ einfachem Aufbau und der überaus einfachen wirtschaftlichen Herstellbarkeit, sondern auch in den breiten Anwendungsmöglichkeiten. Diesbezüglich berücksichtigt die Erfindung die Verwendung der beanspruchten Formulierung als Nahrungsergänzungsmittel und Sonderernährung, aber auch zur Herstellung von Nahrungsergänzungsmitteln, Sonderernährung und Funktionsnahrungsmitteln. Selbstverständlich können die beanspruchten Formulierungen aber auch in der Kosmetik und als Futterzusatzmittel eingesetzt werden.

Im Hinblick auf die Breite der möglichen Einsatzgebiete stehen für die erfindungsgemäßen Formulierungen Anwendungen zur Steigerung der geistigen und körperlichen Leistungsfähigkeit, bei Disstress und auch Sport-bedingtem körperlichem Stress sowie beim Aufmerksamkeits-Defizit (ADHS)-Syndrom im Vordergrund.

Insgesamt umfasst die vorliegende Erfindung eine Formulierung, die auf äußerst wirtschaftliche Weise in kurzer Zeit mit geringem Einsatz an Produktionshilfsmitteln erhältlich ist und die als fertiges Produkt gegenüber dem Stand der Technik hervorragend zur Bereitung wässriger Dispersionen geeignet ist, wobei sie beim Kontakt mit dem wässrigen Medium keinerlei Klumpen ausbildet und sich in Pulverform unmittelbar im Wasser dispergiert bzw. verteilt. Bei Dispergierung mit Korngrößen im unteren Durchmesserbereich werden auf diese Weise nahezu klare, wässrige Dispersionen ohne wahrnehmbare Partikel erhalten, was sich insbesondere im Hinblick auf die Verbraucherakzeptanz dann vor allem positiv auswirkt, wenn die beanspruchten Formulierungen, wie ebenfalls vorgeschlagen, als Nahrungsergänzungsmittel oder "Functional Food" bspw. in wässrigen Getränken eingesetzt werden.

Die beschriebenen Vorteile werden durch das nachfolgende Beispiel verdeutlicht.

### Beispiel

200 g einer Phospholipid-Komponente (Leci PS^{®} 20 P von Degussa Food Ingredients GmbH) wurden mit 800 g einer Fructan-Komponente (Raftilose^{®} von Orafti NA) in einer Granuliertrommel vorgelegt und anschließend während des Granuliervorganges mit 80 g eines zweifach entionisierten Wassers bei Raumtemperatur besprüht.

Der Granulationsvorgang war nach 12 Minuten beendet. Eine Abtrennung möglicher Unter- oder Überkornfraktionen vom erhaltenen Rohkorn wurde nicht vorgenommen. Das erhaltene Fertigkorn mit einem Verhältnis Phospholipid-Komponente : Fructan-Komponente von 1 : 4 hatte folgende Korngrößenverteilung:
63 bis 125 µm: 22 %
125 bis 200 µm: 51 %
200 bis 250 µm: 16 %
250 bis 500 µm: 10 %
> 1 mm: < 0,2 %

Der Restwasser-Gehalt betrug 0,01 Gew.-%.

Diese Formulierung kann in kaltem wie auch warmem Wasser leicht und ohne jegliche Klumpenbildung dispergiert werden und besitzt bzgl. der Granulate eine ausgeprägte Langzeitstabilität und ohne ein Absetzverhalten zu zeigen.

## Patentansprüche

1. Formulierung enthaltend eine Phospholipid-Komponente als physiologisch aktiven Inhaltsstoff; **dadurch gekennzeichnet, dass** sie in wasserdispergierbarer Granulatform vorliegt und neben der Phospholipid-Komponente eine Fructan-Komponente als Formulierungshilfsmittel im Gew.-Verhältnis 5 bis 70 : 95 bis 30 enthält.

2. Formulierung nach Anspruch 1, **dadurch gekennzeichnet, dass** sie als Phospholipid-Komponente mindestens einen Vertreter der Reihe Phosphatidylcholin, Phosphatidylethanolamin, Phosphatidylinosit, Phosphatidylserin und/oder deren Lysoformen enthält.

3. Formulierung nach einem der Ansprüche 1 oder 2, **dadurch gekennzeichnet, dass** der Phospholipid-Anteil an der Gesamtformulierung mindestens 2,0 Gew.-% beträgt.

4. Formulierung nach einem der Ansprüche 1 bis 3, **dadurch gekennzeichnet, dass** der Anteil an Phosphatidylserin an der Gesamtformulierung mindestens 5,0 Gew.-% beträgt.

5. Formulierung nach einem der Ansprüche 1 bis 4, **dadurch gekennzeichnet, dass** sie Lecithin mit einem Phosphatidylserin-Gehalt von mindestens 20 Gew.-% enthält.

6. Formulierung nach einem der Ansprüche 1 bis 5, **dadurch gekennzeichnet, dass** als Fructan-Komponente mindestens ein Vertreter der Reihe Graminan, Inulin und Levan enthalten ist.

7. Formulierung nach einem der Ansprüche 1 bis 6, **dadurch gekennzeichnet, dass** das Gew.-Verhältnis von Phospholipid-Komponente zur Fructan-Komponente 10 bis 40 : 90 bis 60 und besonders bevorzugt 15 bis 30 : 85 bis 70 beträgt.

8. Formulierung nach einem der Ansprüche 1 bis 7, **dadurch gekennzeichnet, dass** sie einen Wassergehalt von 0,01 bis 10 Gew.-% besitzt.

9. Formulierung nach einem der Ansprüche 1 bis 8, **dadurch gekennzeichnet, dass** die Granulate eine Korngröße von 10 µm bis 1 mm und besonders bevorzugt von 100 bis 300 µm aufweisen.

10. Formulierung nach einem der Ansprüche 1 bis 9, **dadurch gekennzeichnet, dass** sie weitere physiologisch aktive Bestandteile und/oder Formulierungshilfsmittel, wie z.B. von den Hauptkomponenten verschiedene Kohlenhydrate, Vitamine, Alkohole, Aminosäuren, Fettsäuren, Carbonsäuren, Salze, Faserstoffe, Aroma- und Farbstoffe natürlichen oder synthetischen Ursprungs, enthält.

11. Verfahren zur Herstellung einer Formulierung nach einem der Ansprüche 1 bis 10, **dadurch gekennzeichnet, dass** die Phospholipid-Komponente in einer Granulier-Trommel mit der Fructan-Komponente im Gewichtsverhältnis 5 bis 40 : 95 bis 60 ggf. mit weiteren physiologisch aktiven Bestandteilen und/oder Formulierungshilfsmitteln vorgelegt wird, anschließend mit 5 bis 20 Gew.-% bezogen auf die Trockenmischung mit mind. einfach entionisiertem Wasser versetzt wird und anschließend auf eine Korngröße von 10 µm bis 1 mm granuliert wird.

12. Verfahren nach Anspruch 11, **dadurch gekennzeichnet, dass** die Granulation so lange durchgeführt wird, bis der Wassergehalt der Granulate 0,01 bis 10 Gew.-% beträgt.

13. Verwendung der Formulierung nach einem der Ansprüche 1 bis 10 als und zur Herstellung von Nahrungsergänzungsmitteln und Sonderernährung sowie zur Herstellung von Funktionsnahrungsmitteln.

## Claims

1. Formulation containing a phospholipid component as physiologically active ingredient, **characterized in that** it is present in water-dispersible granule form and, in addition to the phospholipid component, contains a fructan component as formulation aid in the weight ratio 5 to 70:95 to 30.

2. Formulation according to Claim 1, **characterized in that**, as phospholipid component, it contains at least one representative of the series phosphatidylcholine, phosphatidylethanolamine, phosphatidylinositol, phosphatidylserine and/or lyso forms thereof.

3. Formulation according to either Claim 1 or 2, **characterized in that** the phospholipid fraction of the total formulation is at least 2.0% by weight.

4. Formulation according to one of Claims 1 to 3, **characterized in that** the phosphatidylserine fraction of the total formulation is at least 5.0% by weight.

5. Formulation according to one of Claims 1 to 4, **characterized in that** it contains lecithin having a phosphatidylserine content of at least 20% by weight.

6. Formulation according to one of Claims 1 to 5, **characterized in that**, as fructan component, at least one representative of the series graminan, inulin and levan is present.

7. Formulation according to one of Claims 1 to 6, **characterized in that** the weight ratio of phospholipid component to fructan component is 10 to 40:90 to 60 and particularly preferably 15 to 30:85 to 70.

8. Formulation according to one of Claims 1 to 7, **characterized in that** it has a water content of 0.01 to 10% by weight.

9. Formulation according to one of Claims 1 to 8, **characterized in that** the granules have a particle size from 10 µm to 1 mm, and particularly preferably from 100 to 300 µm.

10. Formulation according to one of Claims 1 to 9, **characterized in that** it contains further physiologically active constituents and/or formulation aids, e.g. carbohydrates different from the main components, vitamins, alcohols, amino acids, fatty acids, carboxylic acids, salts, fibers, flavorings and colorings of natural or synthetic origin.

11. Method for producing a formulation according to one of Claims 1 to 10, **characterized in that** the phospholipid component is charged in a granulating drum together with the fructan component in the weight ratio 5 to 40:95 to 60, if appropriate with further physiologically active constituents and/or formulation aids, subsequently admixed with 5 to 20% by weight, based on the dry mixture, of at least once-deionized water and subsequently granulated to a particle size from 10 µm to 1 mm.

12. Method according to Claim 11, **characterized in that** the granulation is carried out until the water content of the granules is 0.01 to 10% by weight.

13. Use of the formulation according to one of Claims 1 to 10 as, and for production of, food supplements and special diet and also for producing functional foods.

## Revendications

1. Formulation contenant un composant phospholipide comme constituant physiologiquement actif, **caractérisée en ce qu'**elle se présente sous la forme de granulés dispersibles dans l'eau et contient, en plus du composant phospholipide, un composant fructane comme adjuvant de formulation dans le rapport en poids de 5 à 70 : 95 à 30.

2. Formulation selon la revendication 1, **caractérisée en ce qu'**elle contient, comme composant phospholipide, au moins un représentant de la gamme phosphatidylcholine, phosphatidyléthanolamine, phosphatidylinosite, phosphatidylsérine et/ou leurs formes « lyso ».

3. Formulation selon l'une des revendications 1 ou 2, **caractérisée en ce que** la proportion de phospholipide dans la formulation globale s'élève à au moins 2,0 % en poids.

4. Formulation selon l'une des revendications 1 à 3, **caractérisée en ce que** la proportion de phosphatidylsérine dans la formulation globale s'élève à au moins 5,0 % en poids.

5. Formulation selon l'une des revendications 1 à 4, **caractérisée en ce qu'**elle contient de la lécithine avec une teneur en phosphatidylsérine d'au moins 20 % en poids.

6. Formulation selon l'une des revendications 1 à 5, **caractérisée en ce qu'**elle contient comme composant fructane au moins un représentant de la gamme graminane, inuline et lévane.

7. Formulation selon l'une des revendications 1 à 6, **caractérisée en ce que** le rapport en poids du composant phospholipide au composant fructane s'élève à entre 10 à 40 : 90 à 60 et de manière particulièrement préférée entre 15/85 et 30/70.

8. Formulation selon l'une des revendications 1 à 7, **caractérisée en ce qu'**elle possède une teneur en eau de 0,01 à 10 % en poids.

9. Formulation selon l'une des revendications 1 à 8, **caractérisée en ce que** les granulés présentent une taille de grains de 10 µm à 1 mm et de manière particulièrement préférée de 100 à 300 µm.

10. Formulation selon l'une des revendications 1 à 9, **caractérisée en ce qu'**elle contient d'autres constituants physiologiquement actifs et/ou d'autres adjuvants de formulation, comme par exemple des glucides différents des composants principaux, des vitamines, des alcools, des aminoacides, des acides gras, des acides carboxyliques, des sels, des fibres, des arômes et des colorants d'origine naturelle ou synthétique.

11. Procédé de préparation d'une formulation selon l'une des revendications 1 à 10, **caractérisé en ce que** l'on met le composant phospholipide dans un tambour de granulation avec le composant fructane dans le rapport en poids de 5/95 à 40/60 éventuellement avec d'autres constituants physiologiquement actifs et/ou d'autres adjuvants de formulation, on y ajoute ensuite de 5 à 20 % en poids, par rapport au mélange sec, d'eau au moins une fois désionisée et on granule ensuite à une taille de grains de 10 µm à 1 mm.

12. Procédé selon la revendication 11, **caractérisé en ce que** l'on effectue la granulation suffisamment longtemps pour que la teneur en eau des granulés s'élève à entre 0,01 et 10 % en poids.

13. Utilisation de la formulation selon l'une des revendications 1 à 10, telle quelle ou pour la préparation de compléments alimentaires et d'aliments spéciaux et pour la préparation d'aliments fonctionnels.
